# EUROPEAN PATENT APPLICATION

(11) **EP 1 645 772 A1**
(43) Date of publication of application: **12.04.2006**
(21) Application number: 04023957.6
(22) Date of filing: 07.10.2004
(51) Int. Cl.: F16F 1/04, B60G 15/06

(54) **An adjusting method and adjusting mechanism for remedying the coil pitch tolerance and fatigue deformation of an adjustable helical spring**

(71) Applicant: CHOU, Cheng-Ming, Nanshin Vill, Linko Hsiang, Taipei Hsien (TW)
(72) Inventor: CHOU, Cheng-Ming, Nanshin Vill, Linko Hsiang, Taipei Hsien (TW)
(74) Representative: Beck, Michael Rudolf

(57) **Abstract**

This invention relates to an adjusting method and mechanism for remedying the coil pitch tolerance and the fatigue deformation of the adjustable helical spring (40) in which the adjusting mechanism (70,80) is fixed at one end of the casing of the adjustable helical spring (40) and the pre-load of compression or the pre-load of tension is employed to remedy the coil pitch tolerance and the fatigue deformation and to align the coil pitch with the pitch of screw threads. Whenever the location of the closely contact between the stopper (301) of the rotation member (30) and the spring coils is separation with a meager clearance, by further turning the rotation member (30) to secure the preset of the number of active coils of the helical spring (40), the required pre-load of compression or the pre-load of tension is obtained for the helical spring (40). The adjusting method of this invention is universally applicable to a variety of adjustable helical spring, an effective solution to remedy the coil pitch tolerance and fatigue deformation and also reduces the noise occurred in the adjustable helical spring.

## Description

### Background of the Invention

### 1. Field of the Invention:

This invention relates to an adjusting method and adjusting mechanism for remedying the coil pitch tolerance and fatigue deformation of adjustable helical spring, it is more specifically related to an adjusting method to be applied for the shock absorber of wherein to remedy the coil pitch tolerance and the fatigue deformation on the adjustable helical spring.

### 2. Description of the Related Art:

The prior art of spring rate of the helical spring is determined during the production, so, when applied on the mechanical equipment, there is a problem of irregular specifications, and different helical spring must be designed in order to meet different mechanical equipment or different purpose, it is very diseconomy.

According to the above defects, the inventor therefore applied a casing device of the adjustable helical spring to solve problems on the R.O.C. Patent No. 436588 titled "a casing device of the adjustable helical spring" dated May 28, 2001. This invention comprises of male case, female case and rotation member, which will generate different elastic co-efficiency of helical spring to the demand of the mechanical equipment by the user; the feature is to mounted one end of the helical spring on the center bottom of the seat of the female case, and the other end mounted on the inside of the male case, the plurality of stoppers of the outer or inner screw threads of the rotation member will contact with the spring coils. The number of active coils of the helical spring of the compression or tension of the helical spring will be changed when turning the rotation member, and reach the elastic co-efficiency of the helical spring as well as the application of elastic. Furthermore to enhance the practicability of the helical spring in which to expect by the comprises of various mechanism and patterns, and remedying the spring rate of the helical spring according to the demand of the user, and therefore effectively solve the problem of different specifications, and improve the problem of the prior art of the helical spring.

Although, a casing device of the adjustable helical spring is able to solve the problem of the prior art of the helical spring, but it still has generated many defects of helical spring, that is fatigue and deformation causing by the longtime operation or over-action. So, how to solve the problem effectively to reduce the replace rate of adjustable helical spring is deserved to practical approach and research.

Therefore, the above mechanism of prior art is not a perfect design, and still has many defects to improve.

To avoid such a general defects, the inventor has advocated for many years to research and development and come up with this invention of the adjusting method for remedying the coil pitch tolerance or the fatigue deformation of the adjustable helical spring.

### SUMMARY OF THE INVENTION

The main object of this invention is to provide an adjusting method to remedy the coil pitch tolerance and the fatigue deformation on the adjustable helical spring. The adjusting mechanism is mounted at one end of the casing of the adjustable helical spring in an effort to effectively solve the problem of coil pitch tolerance or fatigue deformation which happen on the adjustable helical spring, thus the rotation member turns effectively and obtain the preset of the number of active coils of the helical spring, and to reduce the noise which often occurs in the adjustable helical spring.

Another object of this invention is to provide an effective method to remedy the coil pitch tolerance and the fatigue deformation which is universally applicable to all kind of the cases of the adjustable helical spring.

Another object of this invention is provide an effective method to remedy the coil pitch tolerance and the fatigue deformation for the adjustable helical spring so as to elongate the service span and to curtail the mechanical failure or trouble.

To accomplish the above mentioned objects, the adjusting mechanism has to be mounted at one end of the casing of the adjustable helical spring on which the helical spring is fixed and the pre-load of compression or the pre-load of tension is utilized to remedy the coil pitch tolerance and the fatigue deformation in an effort to align the helical spring with the pitch of screw threads of the rotation member. In the meantime, the location of the closely contact between the stopper of the rotation member and the spring coils is separation with a meager clearance, a further turning the rotation member will reset up the number of active coils of the helical spring, finally, adjust the pre-load of compression or pre-load of tension of the helical spring. During the process of fabricating the helical spring, each coil pitch is inevitable to have a allowable tolerance, the adjustable helical spring, after having used for a long time, will be subjected to the material fatigue which causes the helical spring deformation, coil pitch change, and the coil pitch tolerance is therefore enlarged, but the pitch of screw threads of the rotation member remains unchanged, in other word, turning the rotation member a turn, the displacement distance in axial direction is the same. To ensure that to turn the rotation member will be not adversely affected by the coil pitch tolerance or the fatigue deformation, the adjusting mechanism is therefore mounted at one end of the casing of the adjustable helical spring to be an initial setting, the initial setting is the location of the closely contact between the stopper of the rotation member and the spring coils is separation with a meager clearance, providing the maximum adjusting range for the pre-load of compression or the pre-load of tension, and providing the maximum adjusting range for the number of active coils. The steps to adjust the number of active coils of the adjustable helical spring are described below:
Step1: To change the pre-load of compression or the pre-load of tension of the helical spring and to recover the coil pitch similar to the pitch of screw threads of the rotation member, in the meantime, the location of the closely contact between the stopper of the rotation member and the spring coils is separation with a meager clearance.
Step2: Turning the rotation member to gain the preset number of active coils of the helical spring. In case the stopper of the rotation member closely contact to the spring coils of the helical spring, but it is hard to turn the rotation member, please return the step 1.
Step3: Using the adjusting mechanism to increase the pre-load of compression or the pre-load of tension, causing the stopper of the rotation member closely contact to the spring coils of the helical spring.

### BRIEF DESCRIPTIONS OF THE DRAWINGS

Fig.1 shows the disassembly of the outer screw threaded rotation member of the adjusting mechanism which is mounted at the end of the m ale case of the adjustable helical spring.
Fig.2 shows an elevation of the outer screw threaded rotation member of the adjusting mechanism which is mounted at the end of the male case of the adjustable helical spring.
Fig.3 shows a diagram of the outer screw threaded rotation member of the adjusting mechanism which is mounted at the end of the male case of the adjustable helical spring.
Fig.4 shows a diagram of the inner screw threaded rotation member of the adjusting mechanism which is mounted at the end of the male case of the adjustable helical spring.
Fig. 5 shows the adjusting method for adjusting the compressive adjustable helical spring with outer screw threaded rotation member where the outer diameter of the male case is smaller than the inner diameter of the female case.
Fig.6 shows the adjusting method for adjusting the tensile adjustable helical spring with outer screw threaded rotation member in which the outer diameter of the male case is smaller than the inner diameter of the female case.
Fig.7 shows the adjusting method for adjusting the compressive adjustable helical spring with the inner screw threaded rotation member where the outer diameter of the male case is smaller than the inner diameter of the female case.
Fig.8 shows the adjusting method for adjusting the tensile adjustable helical spring with the inner screw threaded rotation member where the outer diameter of the male case is smaller than the inner diameter of the female case.

### DETAILED DESCRIPTION OF THE PREFERRED EMBODIMENT

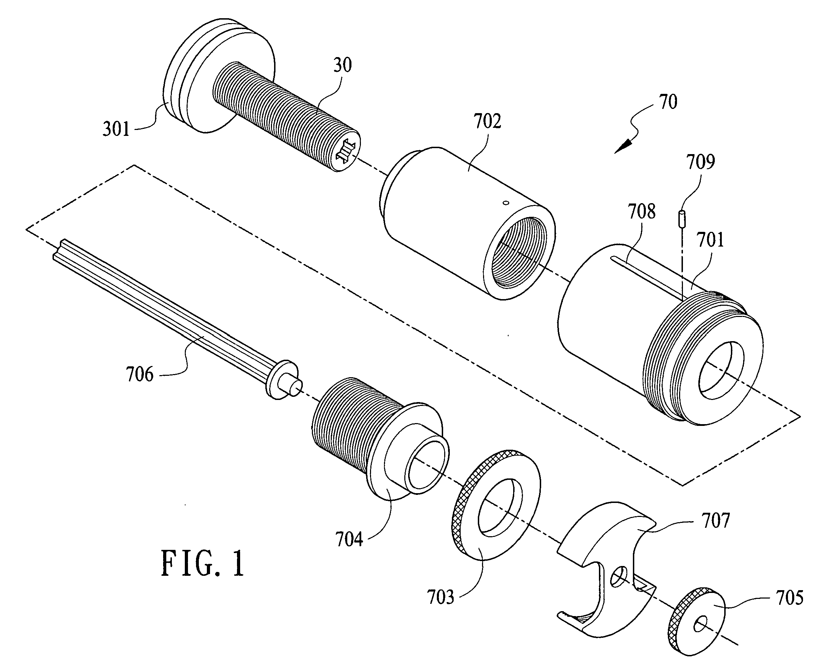

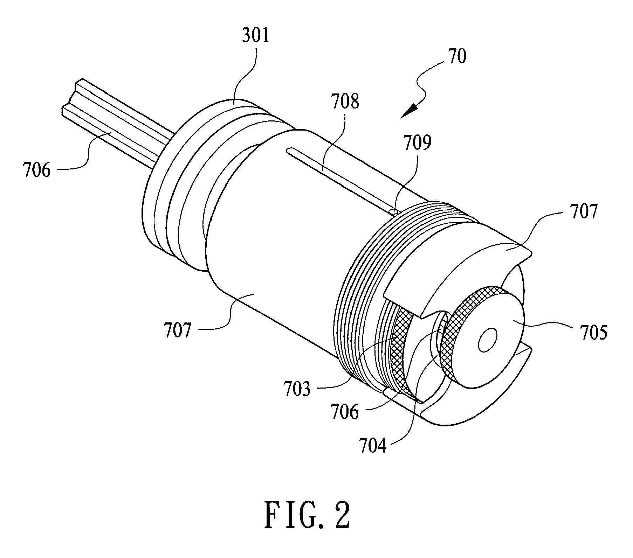

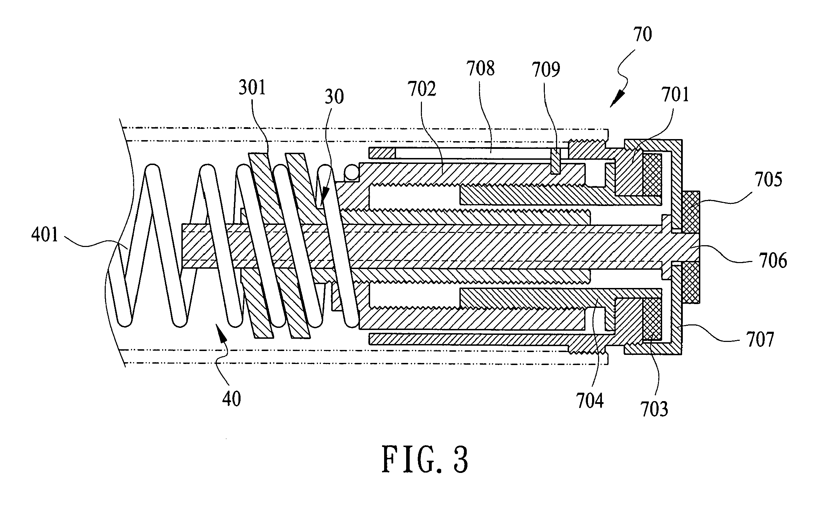

Figs. 1,2 and 3 show the disassembly, elevation and schematic diagram of the adjusting mechanism of this invention which is mounted at one end of the male case of the adjustable helical spring and the outer screw threaded rotation member is composed of a plurality of stoppers. As shown, the adjusting mechanism 70 is composed of the fixing case 701, the preset barrel 702, the drive cylinder 704, the turning knob 703, the drive shaft 706, the rotator knob 705 and the spacer 707.

The fixing case 701 is a center hollow with one center hole at bottom end, the inner diameter of the center hole of the bottom is smaller than the inner diameter of the hollow. On the outer periphery of the bottom of the fixing case 701, sufficient screw threads are cut to be matched with the inner screw threads of the outer housing of the adjustable helical spring assembly. The axial direction of the outer diameter of the fixing case 701 has a groove 708, the other side of the groove 708 is the end, and the bottom of the groove 708 is not contact with the outer screw threads of the bottom of the groove 708, the outer diameter of the bottom of the fixing case 701 mounted screw threads to match with the spacer 707.

The preset barrel 702 is a center hollow too with the inner screw threads to match with the outer screw threads of the drive cylinder 704. The inner screw threads on the other end of the preset barrel 702 are to match with the outer screw threads of the rotation member 30, and the outer diameter is match with one end of the helical spring 40. The outer diameter of rotation member 30 is smaller than the inner diameter of drive cylinder 704, and the preset barrel 702 has an adequate place to accept the retaining key 709.

The retaining key 709 is mounted on the outer diameter of the preset barrel 702, and match to the groove 708 of the fixing case 701 which permitting the preset barrel 702 to move along the axial direction.

The drive cylinder 704 is also a center hollow with one end passing through the bottom hole of the fixing case 701 to be linked with the turning knob 703; the other end of the drive cylinder has outer screw threads to be matched to the inner screw threads of the preset barrel 702.

The turning knob 703, operated manually for adjusting the pre-load of compression or the pre-load of tension of the helical spring 40, is located outside of the fixing case 701 but tightened link with the drive cylinder 704. When the turning knob 703 is turned, it slides on the outside of the bottom of the fixing case 701, and drives the drive cylinder 704 to turn too. Due to the operation of retaining key 709 of the preset barrel 702 and the groove 708 of the fixing case 701, the preset barrel 702 is limited to move axially.

The spacer 707 is a center hollow, and the screw threads of the spacer 707 match to the screw threads on the outer diameter of the bottom of the fixing case 701.

The drive shaft 706 has one end passing through the bottom hole of the fixing case 701 and the center hole of the spacer 707 and finally tightened link with the rotator knob 705. Another end of the outer diameter has an axial drive to slide operated with the axial key of the center hollow rotation member 30.

The rotator knob 705, operated manually for adjusting the number of active coils of the helical spring 40, is located outside of the spacer 707 but tightened link with the drive shaft 706. When the rotator knob 705 is turned, it slides on the spacer 707, and drives the drive shaft 706 to turn the rotation member 30. Due to the axial drive key on the drive shaft 706 drives the axial key of the inner diameter of the rotation member 30 which causing the rotation member 30 turning, and the outer screw threads of the rotation member 30 are match to the inner screw threads of the preset barrel 702, the rotation member 30 moves axially too as the result of the restraint imposed by the retaining key 709.

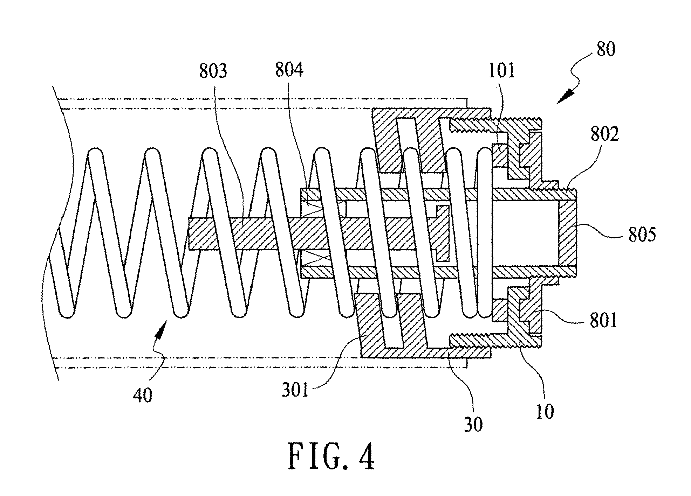

Fig. 4 shows the schematic diagram of inner screw threaded rotation member of the adjusting mechanism 80 and the inner screw threaded rotation member has a plurality of stoppers on the inner diameter. The adjusting mechanism 80 comprises the preset turning knob 801, the outer extractable tube 802, the inner extractable tube 803, the bearing 804 and the seal cap 805.

The outer extractable tube 802 is a center hollow, which has screw threads with one end, sealed with the seal cap 805, and the periphery has screw threads and the other end link with the bearing 804. The distance between the bearing 804 and the seal cap 805 is free travel for the inner extractable tube 803, a stroke for adjusting the compressive or tensile helical spring.

The inner extractable tube 803 has one end link with the bottom of the female case 20, and the other end passing through the bearing 804 of the outer extractable tube 802, and move axially in the outer extractable tube 802, the inner extractable tube 803 slides operated with the bearing 804.

The spring seat 101 located at the bottom of male case 10 is to fix the helical spring 40.

The preset turning knob 801 is a center hollow with the inner screw threads to match with the outer screw threads of the outer extractable tube 802. The other end closely contacts to the male case 10, the preset turning knob 801 slides operated with interface of the male case 10. When the preset turning knob 801 is turned, the male case 10 and the rotation member will move axially to change the pre-load of compression or the pre-load of tension of the helical spring 40.

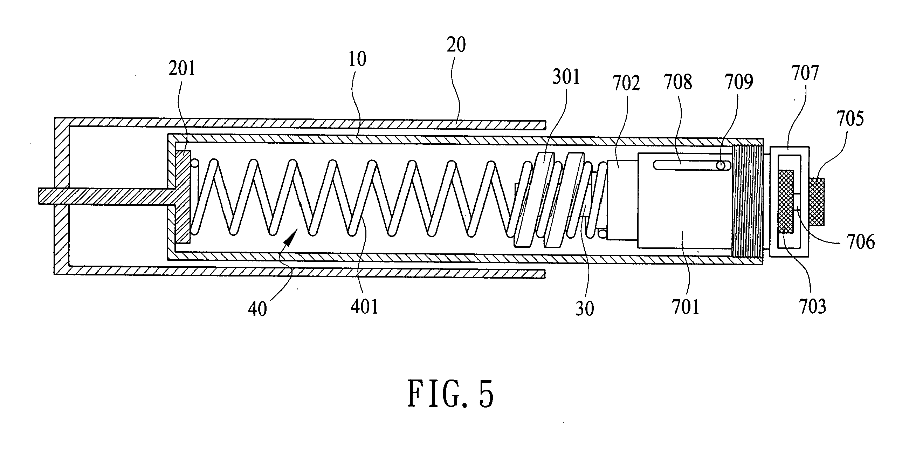

Fig. 5 shows the adjusting method for adjusting the compressive adjustable helical spring with outer screw threaded rotation member where the outer diameter of the male case is smaller than the inner diameter of the female case, as shown, the compressive stroke is determined by the length of the locating seat 201. When the maximum compressive stroke is reached, the male case 10 will contact to the female case 20 in same end. After the compressive adjustable helical spring is assembled, the helical spring 40 is set at an initial load of compression. This is the initial pre-load of compression applied to the male case 10 and the locating seat 201. The initial coil pitch is the coil pitch determined by the initial pre-load of compression. The distance between the initial coil pitch and the coil pitch under no initial pre-load of compression are a specific range of the fatigue deformation of the helical spring 40. After operated for a period of lifetime, the helical spring 40 causes some kind of fatigue deformation. To recover the helical spring 40 to the initial coil pitch, the pre-load of compression shall be less than the initial pre-load of compression. To adjust effectively the number of active coils of the helical spring 40, one turn of the stopper 301 and the pitch of screw threads of the outer screw threaded rotation member shall be equal or less than the initial coil pitch.

The initial setting of the outer screw threaded rotation member 30 of the adjusting mechanism 70
1. When the retaining key 709 on the preset barrel 702 is set at the end of the groove 708, it provides the maximum axial displacement potential at the direction of compression of the helical spring 40.
2. When the s topper 301 of the outer screw threaded rotation member 3 0 makes slight contact to the preset barrel 702, the outer screw threaded rotation member 30 has the maximum of the axial displacement potential at the direction of compression of the helical spring 40.
3. The location of the closely contact between the stopper 301 of the outer screw threaded rotation member 30 and the spring coils 401 is separation with a meager clearance.

After initial setting, the compressive adjustable helical spring has the minimum elastic co-efficiency but the helical spring 40 has the maximum number of active coils.

Increasing the pre-load of compression - turning the turning knob 703 to drive the drive cylinder 704 and the preset barrel 702, causing the preset barrel 702 move axially in the direction of compression of the helical spring 40, in the meantime, the outer screw threaded rotation member 30 is to move axially and the stopper 301 of the outer screw threaded rotation member 30 closely contact to the spring c oils 401, so the pre-load of compression applied to the number of active coils of the helical spring is therefore increased.

Adjust to decrease the number of active coils (increase of elastic co-efficiency) of the helical spring
Step 1: Decrease the pre-load of compression to recover the coil pitch similar to the pitch of screw threads of the outer screw threaded rotation member - turning the turning knob 703 to drive the drive cylinder 704 and the preset barrel 702 so the preset barrel 702 will move axially in the reverse direction of compression of the helical spring 40, the outer screw threaded rotation member 30 will move axially, the stopper 301 of the outer screw threaded rotation member 30 will separate from the spring coils 401 with slight clearance, the compression on the helical spring is therefore decreased.
Step 2: Decrease the number of active coils - turning the rotator knob 705 to drive the drive shaft 706 and the outer screw threaded rotation member 30; the outer screw threaded rotation member 30 will turn and move axially in the direction of compression of the helical spring 40 until the reset turns are reached. In case the stopper 301 of the outer screw threaded rotation member 30 make a contact to the spring coils 401, and the outer screw threaded rotation member 30 is no longer to be turned, go back to the step 1.
Step 3: Increase the pre-load of compression - as referred in the previous section.

Adjust to increase the number of active coils (decrease of elastic co-efficiency) of the helical spring
Step 1: Decrease the preset compression to recover the coil pitch similar to the pitch of screw threads - see the previous section.
Step 2: Increase the number of active coils of helical spring 40 - turning the rotator knob 705 to drive the drive shaft 706 and the outer screw threaded rotation member 30, the outer screw threaded rotation member 30 will turn and move axially in the reverse direction of compression of the helical spring 40 until the preset turns are reached. In case the stopper 301 of the outer screw threaded rotation member 30 make a contact to the spring coils 401, and the outer screw threaded rotation member 30 is no longer to be turned, go back to the step 1.
Step 3: Increase the pre-load of compression ― see the previous section.
   If the inner diameter of the male case is greater than the outer diameter of the female case, the adjusting method for remedying the adjusting mechanism of the compressive adjustable helical spring with the outer screw threaded rotation member is described above.

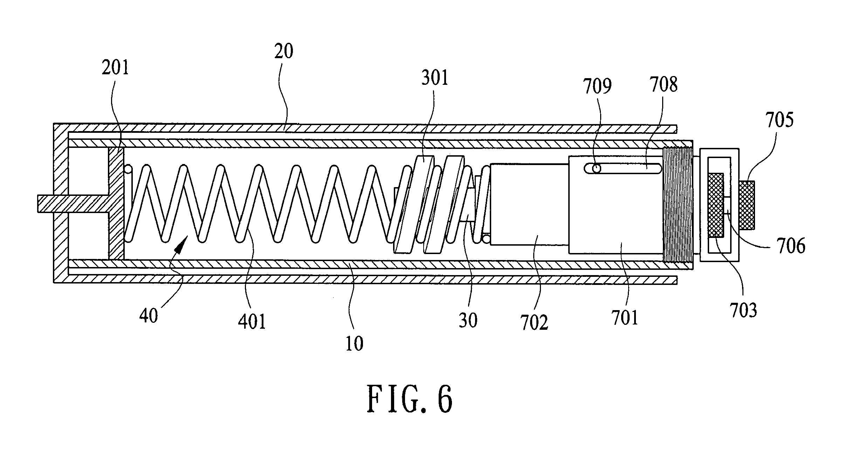

Fig. 6 shows the adjusting method for adjusting the tensile adjustable helical spring with outer screw threaded rotation member in which the outer diameter of the male case is smaller than the inner diameter of the female case. As shown, the tension stroke is determined by the length of the locating seat 201. When the maximum tension stroke is reached, one end of the male case 10 will contact to the locating seat 201. After the tensile adjustable helical spring is assembled, the helical spring 40 is set at an initial load of tension, this is the initial pre-load of tension applied to the male case 10 and the female case 20, the initial coil pitch is the coil pitch determined by the initial pre-load of tension. The difference between the initial coil pitch and the coil pitch under no initial pre-load of tension are a specific range of the fatigue deformation of the helical spring 40. After operated for a period of lifetime, the helical spring 40 causes some kind of fatigue deformation. To recover the helical spring 40 to the initial coil pitch, the pre-load of tension shall be less than the pre-load of tension. To adjust effectively the number of active coils of the helical spring 40, one turn of the stopper 301 and the pitch of screw threads of the outer screw threaded rotation member 30 shall be equal or greater than the initial coil pitch.

Initial setting of the outer screw threaded rotation member 30 for the adjusting mechanism 70
1. When the retaining key 709 on the preset barrel 702 is set at the bottom of the groove 708, it provides the maximum axial displacement potential at the direction of tension of the helical spring 40.
2. When the stopper 301 of the outer screw threaded rotation member 30 makes slight contacts to the preset barrel 702, the outer screw threaded rotation member 30 has the maximum of the axial displacement potential at the reverse direction of tension of the helical spring 40.
3. The location of the closely contact between the stopper 301 of the outer screw threaded rotation member 30 and the spring coils 401 is separation with a meager clearance.

Upon completion of the initial setting, the tensile adjustable helical spring has the minimum elastic co-efficiency but the helical spring 40 has the maximum number of active coils.

Increasing the pre-load of tension - turning the turning knob 703 to drive the drive cylinder 704 and the preset barrel 702 causing the preset barrel 702 move axially in the direction of tension of the helical spring 40, in the meantime, the outer screw threaded rotation member 30 is to move axially and the stopper 301 of the outer screw threaded rotation member 30 closely contacts to the spring coils 401, so the pre-load of tension applied to the number of active coils of the helical spring 40 is therefore increased

Adjust to decrease the number of active coils (increase of elastic co-efficiency) of the helical spring 40
Step1: Decrease the pre-load of tension to recover the coil pitch similar to the pitch of screw threads of rotation member 30 - turning the turning knob 703 to drive the drive cylinder 704 and the preset barrel 702 causing the preset barrel 702 move axially in the reverse direction of tension of the helical spring 40, the outer screw threaded rotation member 30 will move axially, the stopper 301 of the outer screw threaded rotation member 30 will separate from the spring coils 401 with slight clearance, the pre-load of tension on the helical spring 40 is therefore decreased.
Step2: Decrease the number of active coils of the helical spring 40 - turning the rotator knob 705 to drive the drive shaft 706 and the rotation member 30, causing the outer screw threaded rotation member 30 turning and moving axially in the reverse direction of tension of the helical spring 40 until the preset turns are reached. In case the stopper 301 of the outer screw threaded rotation member 30 make a contact to the spring coils 401, and the outer screw threaded rotation member 30 is no longer to be turned, go back to the step 1.
Step3: Increase the pre-load of tension - as referred in the previous section.

Adjust to increase the number of active coils (decrease of elastic co-efficiency) of the helical spring 40
Step1: Decrease the pre-load of tension to recover the coil pitch similar to the pitch of screw threads - see the previous section.
Step2: Increase the number of active coils of helical spring 40 - turning the rotator knob 705 to drive the drive shaft 706 and the outer screw threaded rotation member 30, the outer screw threaded rotation member 30 will turn and move axially in the direction of tension of the helical spring 40 until the preset turns are reached. In case the stopper 301 of the outer screw threaded rotation member 30 make a contact to the spring coils 401, and the rotation member is no longer to be turned, go back to the step 1.
Step3: Increase the pre-load of tension - as referred in the previous section.

If the inner diameter of the male case is greater than the outer diameter of the female case, the adjusting method for adjusting the adjusting mechanism of the compressive adjustable helical spring with the outer screw threaded rotation member is described above.

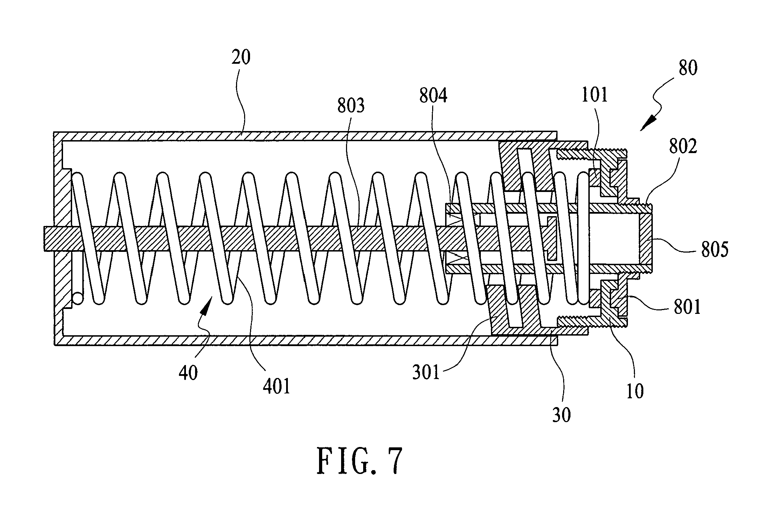

Fig.7 shows the adjusting method for adjusting the compressive adjustable helical spring with inner screw threaded rotation member in which the outer diameter of the male case is smaller than the inner diameter of the female case. As shown, the inner extractable tube 803 of this compressive adjustable helical spring, moving axially in the direction of the outer extractable tube 802. This displacement determines the compressive stroke. When the maximum compression stroke is reached, one end of the inner extractable tube 803 will contact to the seal cap 805. After the compressive adjustable helical spring is assembled, the helical spring 40 is set at an initial pre-load of compression. This is the initial pre-load of compression applied to the inner extractable tube 803 and the bearing 804. The coil pitch formed under the initial load of compression is the initial coil pitch. The difference between the initial coil pitch and the coil pitch formed under no initial pre-load of compression is a specific range of the fatigue deformation of the helical spring 40. After operated for a period of lifetime, the helical spring 40 causes some kind of fatigue deformation. To recover the helical spring 40 to the initial coil pitch, the pre-load of compression shall b e less than the initial pre-load of compression. To adjust effectively the number of active coils of the helical spring 40, one turn of the stopper 301 and the pitch of screw threads of the inner screw threaded rotation member 30 shall be equal or less than the initial coil pitch.

Initial setting of the inner screw threaded rotation member 30 for the adjusting mechanism 80
1. When the inner screw thread of the preset turning knob 801 link with the seal cap 805 of the outer extractable tube 802, it provides the maximum axial displacement potential at the direction of the helical spring 40.
2. When the s topper 301 of the inner screw threaded rotation member 3 0 slightly contacts the male case 10, it providing the rotation member 30 has the maximum of the axial displacement potential at the direction of compression of the helical spring 40.
3. The location of the closely contact between the stopper 301 of the inner screw threaded rotation member 30 and the spring coils 401 is separation with a meager clearance.

Upon completion of the initial setting, the compressive adjustable helical spring has the minimum elastic co-efficiency and the helical spring 40 has the maximum number of active coils.

Increasing the pre-load of compression - turning the turning knob 803 to drive the male case 10 and the rotation member 30 move axially in the direction of compression of the helical spring 40, causing the stopper 301 of the inner screw threaded rotation member 30 closely contact to the spring coils 401, so the pre-load of compression applied to the number of active coils of the helical spring 40 is therefore increased.

Adjust to decrease the number of active coils (increase of elastic co-efficiency) of the helical spring 40
Step1: Decrease the pre-load of compression to recover the coil pitch similar to the pitch of screw threads of the inner screw threaded rotation member30 - turning the preset turning knob 801 to drive the male case 10 and the inner screw threaded rotation member 30 to move axially in the reverse direction of compression of the helical spring 40, the stopper 301 of the inner screw threaded rotation member 30 will separate from the spring coils 401 with slight clearance, the pre-load of compression of the helical spring 40 is therefore decreased.
Step2: Decrease the number of active coils of helical spring 40 - turning the inner screw threaded rotation member 30, causing the inner screw threaded rotation member 30 will turn and move axially in the direction of compression of the helical spring 40 until the preset turns are reached. In case the stopper 301 of the inner screw threaded rotation member 30 make a contact to the spring coils 401, and the inner screw threaded rotation member 30 is no longer to be turned, go back to the step 1.
Step3: Increase the pre-load of compression - as referred in the previous section.

Adjust to increase the number of active coils (decrease of elastic co-efficiency) of the helical spring 40
Step1: Decrease the pre-load of compression to recover the coil pitch similar to the pitch of screw threads ― see the previous section.
Step2: Increase the number of active coils of helical spring 40 ― turning the inner screw threaded rotation member 30, causing the inner screw threaded rotation member 30 will turn and move axially in the reverse direction of compression of the helical spring 40 until the preset turns are reached. In case the stopper 301 of the inner screw threaded rotation member 30 make a contact to the spring coils 401, and the inner screw threaded rotation member 30 is no longer to be turned, go back to the step 1.
Step3: Increase the pre-load of compression - as referred in the previous section.

If the inner diameter of the male case is greater than the outer diameter of the female case, the adjusting method for adjusting the adjusting mechanism of the compressive adjustable helical spring with the inner screw threaded rotation member is described above.

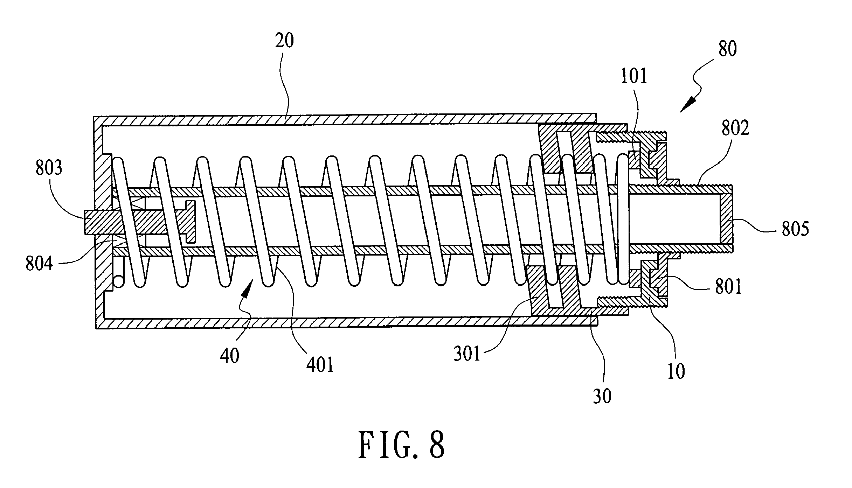

Fig.8 shows the adjusting method for adjusting the tensile adjustable helical spring with inner screw threaded rotation member in which the outer diameter of the male case is smaller than the inner diameter of the female case. As shown, in the tensile adjustable helical spring, the inner extractable tube 803 of the tensile adjustable helical spring moves axially in the direction of the outer extractable tube 802. This displacement determines the tension stroke. When the maximum tension stroke is reached, one end of the inner extractable tube 803 will contact to the bearing 804. After the tensile adjustable helical spring is assembled, the helical spring 40 is set at an initial load of tension. This is the initial pre-load of tension applied to the inner extractable tube 803, the outer extractable tube 802 and the seal cap 805. The coil pitch formed under the initial pre-load of tension is the initial coil pitch. The difference between the initial coil pitch and the coil pitch formed under no initial pre-load of tension is a specific range of the fatigue deformation of the helical spring 40. After operated for a period of lifetime, the helical spring 40 causes some kind of fatigue deformation. To recover the helical spring 40 to the initial coil pitch; the pre-load of tension shall be less than the initial pre-load of tension. To adjust effectively the number of active coils of the helical spring 40, one turn of the stopper 301 and the pitch of screw threads of the inner screw threaded rotation member 30 shall be equal or greater than the initial coil pitch.

Initial setting of the inner screw threaded rotation member 30 for the adjusting mechanism 80
1. When the inner screw threads of the preset turning knob 801 links with the seal cap 805 of the outer extractable tube 802, it provides the maximum axial displacement potential at the direction of the helical spring 40.
2. When the s topper 301 of the inner screw threaded rotation member 3 0 slightly contacts the male case 10, it provides the maximum of axial displacement potential at the reverse direction of tension of the helical spring 40.
3. The location of the closely contact between the stopper 301 of the inner screw threaded rotation member 30 and the spring coils 401 is separation with a meager clearance.

Upon completion of the initial setting, the tensile adjustable helical spring has the minimum elastic co-efficiency but the helical spring 40 has the maximum number of active coils.

Increasing the pre-load of tension ― turning the preset turning knob 801 to drive the male case 10 and the inner screw threaded rotation member 30 to move axially in the direction of tension of the helical spring 40, and causing the stopper 301 of the inner screw threaded rotation member 30 closely contact to the spring coils 401, so the pre-load of tension applied to the number of active coils of the helical spring is therefore increased.

Adjust to decrease the number of active coils (increase of elastic co-efficiency) of the helical spring 40
Step 1: Decrease the pre-load of tension to recover the coil pitch similar to the pitch of screw threads of the rotation member 30 - turning the preset turning knob 801 to drive the male case 10 and the inner screw threaded rotation member 30 to move axially in the reverse direction of tension of the helical spring 40, the stopper 301 of the inner screw threaded rotation member 30 will separate from the spring coils 401 with slight clearance, the pre-load of tension of the helical spring 40 is therefore decreased.
Step2: Decrease the number of active coils of the helical spring 40 - turning the inner screw threaded rotation member 30, causing the inner screw threaded rotation member 30 to turn and move axially in the reverse direction of tension of the helical spring 40 until the preset turns are reached. In case the stopper 301 of the inner screw threaded rotation member 30 makes a contact to the spring coils 401, and the inner screw threaded rotation member 30 is no longer to be turned, go back to the step1.
Step3: Increase the pre-load of tension - as referred in the previous section.

Adjust to increase the number of active coils (decrease of elastic co-efficiency) of the helical spring 40
Step1: Decrease the pre-load of tension to recover the coil pitch similar to the pitch of screw threads - see the previous section.
Step2: Increase the number of active coils of helical spring 40 - turning the inner screw threaded rotation member 30, causing the inner screw threaded rotation member 30 moves axially in the direction of tension of the helical spring 40 until the preset turns are reached. In case the stopper 301 of the inner screw threaded rotation member 3 0 makes a contact to the spring coils 401, and the inner screw threaded rotation member is no longer to be turned, go back to the step 1.
Step3: Increase the pre-load of tension - as referred in the previous section.

If the inner diameter of the male case is greater than the outer diameter of the female case, the adjusting method for adjusting the adjusting mechanism of the tensile adjustable helical spring with the inner screw threaded rotation member is described above.

## Claims

1. Adjusting method for remedying the coil pitch tolerance or fatigue deformation of an adjustable helical spring (40) in which an adjusting mechanism (70; 80) is mounted at one end of a casing, wherein in an initial setting the location of the closest contact between a stopper (301) of a rotation member (30) of the adjusting mechanism (70; 80) and the coils of the spring (40) is separation with a meager clearance, providing a maximum adjusting range for the pre-load of compression or the pre-load of tension of the spring (40) and providing a maximum adjusting range for the number of active coils of the spring (40), wherein changing, i.e. increasing or decreasing the number of active coils of the adjustable helical spring (40) is performed as follows:
- Step 1: changing of the pre-load of compression or the pre-load of tension of the helical spring (40) so as to recover a coil pitch similar to the pitch of screw threads of the rotation member (30) at which the location of the closest contact between the stopper (301) of the rotation member (30) and the spring coils is separation with a meager clearance,
- Step 2: turning the rotation member (30) to gain the preset number of active coils of the helical spring (40), and, in case the stopper (301) of the rotation member (30) closely contacts the spring coils of the helical spring (40) and it is hard to turn the rotation member (30), returning to step 1,
- Step 3: using the adjusting mechanism (70; 80) to increase the pre-load of compression or the pre-load of tension causing the stopper (301) of the rotation member (30) to closely contact the spring coils of the helical spring (40).

2. Adjusting method of claim 1, wherein the adjusting mechanism (70; 80) comprises an outer screw threaded rotation member (30) or an inner screw threaded rotation member (30).

3. Adjusting method of claim 1, wherein the adjusting mechanism (70) has an outer screw threaded rotation member (30) and comprises:
- a fixing case (701) formed as a center hollow with one center hole at bottom end, the inner diameter of the center hole of the bottom being smaller than the inner diameter of the hollow; the outer periphery of the bottom of the fixing case (701) being provided with sufficient screw threads matching with inner screw threads of an outer housing of the adjustable helical spring assembly; in axial direction the outer diameter of the fixing case (701) has a groove (708), the other side of the groove is an end while the bottom of the groove is not contact with outer screw threads of the bottom of the groove, the outer diameter of the bottom of the fixing case (701) being provided with further screw threads to match with a spacer (707);
- a preset barrel (702) formed as a center hollow with first inner screw threads to match with outer screw threads of a drive cylinder (704), second inner screw threads to match with outer screw threads of the rotation member (30), and an outer diameter to match with one end of the helical spring (40), while the outer diameter of rotation member (30) is smaller than the inner diameter of drive cylinder (704);
- a retaining key (709) received in adequate space on the outer diameter of the preset barrel (702) and matching with the groove (708) of the fixing case (701) permitting the preset barrel (702) to move along the axial direction;
- the drive cylinder (704) formed as a center hollow with one end passing through the bottom hole of the fixing case (701) to link with turning knob (703), the other end of the drive cylinder (704) having outer screw threads to match with the inner screw threads of the preset barrel (702);
- the turning knob (703) being located outside of the fixing case (701) but tightened link with the drive cylinder (704) and adapted to be operated manually for adjusting the pre-load of compression or the pre-load of tension of the helical spring, wherein when the turning knob (703) is turned, it slides on the outside of the bottom of the fixing case (701) and drives the drive cylinder (704) to turn, too, and wherein due to the operation of retaining key (709) of the preset barrel (702) and the groove of the fixing case, the preset barrel is limited to move axially;
- the spacer (707) is formed as a center hollow, and the screw threads of the spacer match with the screw threads on the outer diameter of the bottom of the fixing case (701);
- a drive shaft (706) having one end passing through the bottom hole of the fixing case (701) and the center hole of the spacer (707) and finally tightened link with a rotator knob (705), another end of the outer diameter having an axial drive to slide operate with an axial key of the center hollow rotation member (30);
- the rotator knob (705) being located outside of the spacer (707) but tightened link with the drive shaft and adapted to be operated manually for adjusting the number of active coils of the helical spring (40), wherein when the rotator knob (705) is turned, it slides on the spacer (707) and drives the drive shaft (706) to turn the rotation member (30), and wherein due to the axial drive key on the drive shaft drives the axial key of the inner diameter of the rotation member which causing the rotation member turning, and the outer screw threads of the rotation member are match to the inner screw threads of the preset barrel, the rotation member moves axially, too, as a result of the restraint imposed by the retaining key.

4. Adjusting method to of claim 1, wherein said is employed to an adjusting mechanism of a compressive adjustable helical spring with an outer screw threaded rotation member.

5. Adjusting method of claim 1, wherein said is employed to an adjusting mechanism of a tensile adjustable helical spring with an outer screw threaded rotation member.

6. Adjusting method of claim 1, wherein said is employed to an adjusting mechanism of a compressive adjustable helical spring with an inner screw threaded rotation member.

7. Adjusting method of claim 1, wherein said is employed to an adjusting mechanism of a tensile adjustable helical spring with an inner screw threaded rotation member.

8. Adjusting method of claim 1, wherein said is employed to change (increase or decrease) the number of active coils of a compressive adjustable helical spring by turning the rotation member, one turn of the stopper and the pitch of screw threads of the rotation member being equal to or less than the initial coil pitch.

9. Adjusting method of claim 1, wherein said is employed to change (increase or decrease) the number of active coils of a tensile adjustable helical spring by turning the rotation member, one turn of the stopper and the pitch of screw threads of the rotation member being be equal to or greater than the initial coil pitch.

10. Adjusting method of claim 8, wherein the initial coil pitch is the coil pitch determined by the initial pre-load of compression, and wherein the distance between the initial coil pitch and the coil pitch under no initial pre-load of compression is a specific range of the fatigue deformation of the helical spring.

11. Adjusting method of claim 9, wherein the initial coil pitch is the coil pitch determined by the initial pre-load of tension, and wherein the distance between the initial coil pitch and the coil pitch under no initial pre-load of tension is a specific range of the fatigue deformation of the helical spring.

12. Adjusting method of claim 1, wherein the turning knob driving the rotation member is turned for increasing the pre-load of compression, causing the rotation member to move axially in the direction of compression of the helical spring, and causing the stopper of the rotation member to closely contact the spring coils, so that the pre-load of compression applied to the number of active coils of the helical spring is increased.

13. Adjusting method of claim 1, wherein the turning knob driving the rotation member is turned to increase the pre-load of tension, causing the rotation member to move axially in the direction of tension of the helical spring, and causing the stopper of the rotation member to closely contact the spring coils, so that the pre-load of tension applied to the number of active coils of the helical spring is increased.
